# EUROPEAN PATENT SPECIFICATION

(11) **EP 3 497 616 B1**
(45) Date of publication and mention of the grant of the patent: **03.06.2020**
(21) Application number: 17749671.8
(22) Date of filing: 27.07.2017
(51) Int. Cl.: G06K 9/00

(54) **METHOD FOR ASSISTING A DRIVER OF A MOTOR VEHICLE IN DRIVING THE MOTOR VEHICLE, DRIVER ASSISTANCE SYSTEM AS WELL AS MOTOR VEHICLE**
VERFAHREN ZUM UNTERSTÜTZEN EINES FAHRERS EINES KRAFTFAHRZEUGS BEIM FAHREN DES FAHRZEUGS, FAHRERASSISTENZSYSTEM SOWIE KRAFTFAHRZEUG
PROCÉDÉ D'AIDE À LA CONDUITE D'UN VÉHICULE AUTOMOBILE DANS LA CONDUITE DU VÉHICULE AUTOMOBILE, SYSTÈME D'AIDE À LA CONDUITE ET VÉHICULE AUTOMOBILE

(30) Priority: 09.08.2016 DE 102016114693
(43) Date of publication of application: 19.06.2019
(73) Proprietor: Connaught Electronics Ltd., Tuam, County Galway (IE)
(72) Inventor: WARD, Enda Peter, Tuam County Galway (IE)
(74) Representative: Jauregui Urbahn, Kristian
(86) International application number: PCT/EP2017/069013
(87) International publication number: WO 2018/029003

(56) References cited:
- EP-A2- 1 251 032
- DE-A1-102005 017 811

## Description

The invention relates to a method for assisting a driver of a motor vehicle in driving the motor vehicle, wherein based on image data captured from an environmental region of the motor vehicle by at least one vehicle-side camera, at least one image of the environmental region is created for displaying on a vehicle-side display device. In addition, the invention relates to a driver assistance system as well as to a motor vehicle with such a driver assistance system. DE102005017811 A1 discloses a method according to the preamble of claim 1.

It is already known from the prior art to assist a driver of a motor vehicle in driving the motor vehicle by for example displaying the environmental region of the motor vehicle captured by a vehicle-side camera system on a vehicle-side display device. Therein, three-dimensional representations of the environmental region are increasingly also displayed on the display device from a so-called third person perspective. Such a third person perspective shows the environmental region of the motor vehicle as well as the motor vehicle itself from the view of a viewer external to vehicle, a so-called virtual camera, and presents a view of the environmental region particularly intuitive for the driver. For creating the third person perspective, an image of the environmental region is usually determined from the image data of the vehicle-side camera system, which gives the impression as if it would have been captured by a real camera in a position of the virtual camera.

Since usually only the image data of the vehicle-side camera system is available for creating the third person perspective, it is not possible to capture sides of objects, which are facing away from the vehicle-side camera system and thereby are outside of the capturing range of the camera system. Thus, the position of the virtual camera cannot be arbitrarily selected, or images of the environmental region not intuitive for the driver are generated, by which the driver cannot reliably estimate a current traffic situation or scene.

In addition, it can occur that in case of cameras equipped with fish-eye lenses a size perception of objects is depending on a position of the objects to the motor vehicle. This can also result in a non-intuitive representation of the current scene in the environmental region on the display device. Further, in combining or stitching image data of various cameras, for example image data of a front camera and a lateral camera of the motor vehicle, information can be lost when an object changes between capturing ranges of the cameras and thereby is within a blind spot. This loss of information can also result in an incorrectly generated image of the environmental region.

It is the object of the present invention to provide a solution, how an environmental region of a motor vehicle can be reliably captured such that a driver of the motor vehicle can be assisted in driving the motor vehicle.

According to the invention, this object is solved by a method, a driver assistance system as well as a motor vehicle according to the respective independent claims. Advantageous embodiments of the invention are the subject matter of the dependent claims, of the description as well as of the figures.

In an embodiment of a method for assisting a driver of a motor vehicle in driving the motor vehicle, based on image data captured from an environmental region of the motor vehicle by at least one vehicle-side camera, at least one image of the environmental region is created for displaying on a vehicle-side display device. In particular, another vehicle in the environmental region is identified based on the image data and the other vehicle is replaced with a model of a vehicle in the at least one image of the environmental region.

In a method for assisting a driver of a motor vehicle in driving the motor vehicle, based on image data captured from an environmental region of the motor vehicle by at least one vehicle-side camera, at least one image of the environmental region is preferably created for displaying on a vehicle-side display device. Moreover, another vehicle in the environmental region is identified based on the image data and the other vehicle is replaced with a model of a vehicle in the at least one image of the environmental region.

Thus, a driver assistance system can be realized by means of the method, which assists the driver in driving the motor vehicle to the effect that the at least one image of the environmental region is displayed on the vehicle-side display device. In particular, a video sequence of the environmental region is displayed on the vehicle-side display device, by which the driver of the motor vehicle can perceive the environmental region nearly in real time by means of the display device. Therein, a third person perspective is preferably created based on the image data, from which the environmental region with the motor vehicle is represented in the at least one image by determining a pose of a virtual camera spaced from the motor vehicle in the environmental region and determining the at least one image from the view of the virtual camera. The at least one image is for example presented in an interior mirror of the motor vehicle and/or on a screen in the center console and/or on a head-up display. Thus, the image shows a three-dimensional representation of the environmental region, in particular from the view of an observer external to vehicle. Therein, the motor vehicle itself can be represented as a model in the image.

Therein, the at least one image is in particular created based on the image data of a so-called surround view camera system of the motor vehicle, wherein the surround view camera system for example can have a plurality of cameras, which are disposed distributed on the motor vehicle. Thereto, the motor vehicle can for example include a front camera, a rear camera as well as two wing mirror cameras. Therein, the cameras can be equipped with so-called fish-eye lenses, by which a capturing range of the respective camera is increased. The at least one image of the environmental region is generated from this image data for example by combining or stitching the image data. Therein, it can in particular be provided that the third person perspective, from which the environmental region with the motor vehicle is represented in the image, can be changed by the driver of the motor vehicle by the pose of the virtual camera in the environmental region for example being preset by the driver. Thereto, the driver can for example select one of multiple predetermined poses, thus a position and an orientation of the virtual camera, and/or freely select the pose of the virtual camera for example by gesture operation.

Based on the image data, the other vehicle can additionally be recognized for example by object recognition algorithms. Therein, the other vehicle is in particular a vehicle approaching the motor vehicle. The other vehicle can for example approach the motor vehicle from the front to pass by the motor vehicle. This other vehicle can now be replaced with a model, in particular a three-dimensional model or 3D model, which is to represent the real vehicle. Thereto, that image data associated with the other vehicle can for example be identified or extracted and be replaced with image data describing the model of the other vehicle. In other words, this means that the actually captured other vehicle is not displayed on the display device in the at least one image, but that the vehicle is modeled. Thus, an artificially generated partial image area representing the other vehicle is inserted into the at least one image of the environmental region. Therein, models can be determined for multiple other vehicles located in the environmental region of the motor vehicle and inserted into the at least one image of the environmental region.

The three-dimensional model has the advantage that it can be completely defined and the model can therefore be represented from all of the perspectives. Thus, the pose of the virtual camera can advantageously be freely selected such that the other vehicle can also be completely represented and described if it is for example outside of the capturing range of the at least one camera in certain areas. Thus, a side of the other vehicle facing away from the at least one vehicle-side camera can also be visualized by means of the model. A size of the model can also be preset or controlled. Thus, the other vehicle can be prevented from being displayed in an unrealistic size and for example suddenly erratically changing its size within the video sequence in case of a camera with a fish-eye lens depending on a position of the vehicle to the motor vehicle. By replacing the other vehicle with the 3D model of the vehicle in the image, thus, an intuitive image of the current traffic situation with correct size ratios of the other vehicle can be presented within the scene on the display device. Thus, the driver can reliably perceive the environmental region and correctly assess the traffic situation.

Therein, it can be provided that the model of the other vehicle is inserted into the at least one image if the other vehicle is outside of a virtual capturing range of the virtual camera because of the determined pose of the virtual camera and/or if the other vehicle is outside of a capturing range of the at least one vehicle-side camera at least in certain areas because of the determined pose of the virtual camera. According to this embodiment, thus, the model of the other vehicle is in particular inserted if the other vehicle is "captured" by the virtual camera from a perspective, by which the representation of the other vehicle cannot be generated based on the image data of the real camera. For example, this can occur if an area of the other vehicle is to be represented on the display device by the selected pose of the virtual camera, which is not in the capturing range of the real camera since this area is for example facing away from the vehicle-side camera. Now, in order to still be able to provide this perspective in case of such a pose, the model of the other vehicle is used, which can be presented from the desired perspective. Alternatively or additionally, the model can also be provided if the other vehicle is not seen in the image by the selected perspective and thus the image data of the other vehicle is not incorporated in the image synthesis for creating the image. Thus, any pose of the virtual camera can be advantageously preset and thereby any realistic view of the environmental region can be generated.

Particularly preferably, a distance of the other vehicle to the motor vehicle is determined and the other vehicle is replaced with the model in the image of the environmental region as soon as the distance of the other vehicle to the motor vehicle falls below a predetermined threshold value. For example, the distance can be acquired based on the image data itself and/or by a vehicle-side distance sensor, for example a radar sensor, an ultrasonic sensor and/or a lidar sensor. This means that the captured vehicle is represented in the image until the distance of the vehicle to the motor vehicle falls below the threshold value. Upon falling below the threshold value, the other vehicle is replaced with the model. This embodiment is in particular advantageous in a camera system with a blind spot and/or with cameras with fish-eye lenses since in this case the correct representation of the other vehicle is dependent on a position of the vehicle to the motor vehicle. Thus, as soon as the vehicle has a position to the motor vehicle, by which the correct representation of the other vehicle can no longer be ensured, the model representing the other vehicle is inserted into the image.

Preferably, at least one characteristic feature of the other vehicle is determined and the model for representing the other vehicle is determined depending on the at least one characteristic feature. In particular, a brand and/or a type and/or a color of the other vehicle are determined as the characteristic feature and the model representing the brand and/or the type and/or the color of the vehicle is determined. In other words, this means that an appearance of the model is adapted to the other vehicle. The model is for example created such that it has the same color as the actual vehicle. Thereto, the at least one characteristic feature of the other vehicle can for example be determined by means of classification methods, for example the support vector method (SVM - "Support Vector Machine"), and/or machine learning, in particular "deep machine learning". Thus, the traffic situation or scene of the environmental region represented on the at least one image can be particularly realistically configured for the driver of the motor vehicle. Thus, the driver is not disturbed or confused by a change between the captured vehicle and the model in the image and thus can concentrate on his driving job.

Therein, it can be provided that respective reference models are associated with predetermined reference features and one of the reference models is selected as the model and inserted into the at least one image based on the at least one determined characteristic feature. This means that a list with various reference models is recorded for example in a vehicle-side storage device and/or in an Internet-based database. Therein, the reference models describe vehicles of certain brands and/or models and/or colors. Depending on the captured characteristic feature, the corresponding reference model is then selected and inserted into the image. Thus, the model can be determined in particularly simple and fast manner and with low computational effort. Thus, it can for example be particularly fast responded and the model can be particularly feat inserted into the image if the other approaching vehicle for example falls below the distance to the motor vehicle. Therein, the vehicle-side database is preferably first searched for the reference model. If the corresponding reference model is not recorded in the vehicle-side database, the database external to vehicle can be searched. The reference model recorded there can then be downloaded and be stored in the vehicle-side database for future rendering.

Preferably, a predetermined object describing the at least one characteristic feature at the other vehicle is captured in the image data and the at least one characteristic feature is determined based on the object. This means that the brand and/or the type and/or the color of the other vehicle are for example not directly captured, but the object uniquely describing the characteristic feature of the other vehicle. Particularly preferably, an official license plate with a registration designation of the other vehicle is captured as the object and the at least one characteristic feature of the other vehicle is determined based on the registration designation. The characteristic feature can for example be determined by searching a database internal to vehicle and/or external to vehicle, for example based on Internet, in which the captured object is recorded with the associated characteristic feature.

This means that the number plate or official license plate of the other vehicle is for example captured by object recognition or pattern recognition. The numeric and/or alphanumeric registration designation is also captured for example by means of text recognition (OCR - "Optical Character Recognition"). The database can be searched for this registration designation, in which the characteristic features associated with the registration designation, for example the brand of the other vehicle as well as the model and the color, are recorded. In addition, it can be provided that the at least one feature, for example the color of the other vehicle, is directly captured and compared to the color recorded in the database. Thereby, it can be checked if the vehicle recorded in the database to the registration designation corresponds to the vehicle captured by the at least one vehicle-side camera. The directly captured features can also be used as input variables for machine learning algorithms. For example, the image of the other vehicle can be uploaded to a server together with the license plate. Thus, an alternative view of the other vehicle is provided such that performance of the classification algorithms can be improved. By capturing the registration designation by means of text recognition, a plurality of information about the other vehicle can be extracted in particularly fast manner and with little computational effort, by which a realistic and exact model of the other vehicle can be determined.

In a development of the invention, the object of the other vehicle is inserted into the image and depicted together with the model describing the other vehicle. This means that for example the official license plate is inserted into the model and thus the model of the other vehicle is depicted with the actual official license plate in the image of the environmental region on the vehicle-side display device. Thus, the impression arises to the driver in looking to the display device as if not the model, but the actual vehicle would be represented on the display device.

Alternatively or additionally, the at least one characteristic feature is wirelessly communicated from the other vehicle to a vehicle-side communication device. This communication is also referred to as car-to-car communication or Car2Car communication. In addition, the other vehicle can for example also communicate position coordinates, in particular GPS data, to the motor vehicle. Thus, a position of the other vehicle to the motor vehicle can be determined based on the position coordinates and an environmental map describing the environmental region, and thus the model can be inserted into the image with the corresponding position to the motor vehicle.

It proves advantageous if an orientation of the other vehicle with respect to the motor vehicle is captured and an orientation of the model in the image is determined depending on the orientation of the other vehicle. Alternatively or additionally, at least one environmental condition, in particular lighting conditions, is captured and the model is adapted to the at least one environmental condition. By capturing the orientation of the other vehicle, the image can be particularly realistically determined by inserting the model into the image such that the orientation of the model in the image coincides with the actual orientation of the other vehicle. The lighting conditions can also be determined. Thereto, a daytime, street lighting and/or a casting of shadow can for example be captured. Then, the model is varied such that it is adapted to the environmental conditions currently existing in the environmental region. Then, the model is for example correspondingly illuminated and therefore represented in the lighting conditions currently existing in the environmental region.

In an advantageous embodiment of the method, the other vehicle is additionally captured by a sensor device different from the at least one camera. Such a sensor device can for example be an ultrasonic sensor, a lidar sensor and/or a radar sensor, by means of which the environmental map describing the environmental region can be generated and updated. Thereby, the other vehicle can be traced or tracked and be registered in the environmental map such that the 3D model of the other vehicle can still be displayed if the other vehicle for example disappears from the capturing range of the at least one camera and the object, for example the official license plate, is no longer visible.

In addition, the invention relates to a driver assistance system for assisting a driver of a motor vehicle in driving the motor vehicle. According to an embodiment, the driver assistance system has at least one camera for capturing image data from an environmental region of the motor vehicle, an evaluation device for creating at least one image of the environmental region and a display device for displaying the at least one image. Moreover, the evaluation device can be adapted to identify another vehicle in the environmental region based on the image data and to replace the other vehicle with a model of a vehicle in the at least one image of the environmental region. Preferably, the driver assistance system has at least one camera for capturing image data from an environmental region of the motor vehicle, an evaluation device for creating at least one image of the environmental region and a display device for displaying the at least one image. The evaluation device is adapted to identify another vehicle in the environmental region based on the image data and to replace the other vehicle with a model of a vehicle in the at least one image of the environmental region.

A motor vehicle according to the invention includes a driver assistance system according to the invention. In particular, the motor vehicle is formed as a passenger car.

The preferred embodiments presented with respect to the method according to the invention and the advantages thereof correspondingly apply to the driver assistance system according to the invention and to the motor vehicle according to the invention.

With indications of "behind", "in front of", "vehicle longitudinal axis", "lateral", "outside", right", "left", etc., the positions and orientations given with an observer looking in the direction of vehicle longitudinal axis of the motor vehicle are specified.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are to be considered as disclosed, in particular by the implementations set out above, which extend beyond or deviate from the feature combinations set out in the relations of the claims.

Now, the invention is explained in more detail based on preferred embodiments as well as with reference to the attached drawings.

There show:
- Fig. 1: a schematic representation of an embodiment of a motor vehicle according to the invention;
- Fig. 2: a schematic representation of an embodiment of a driver assistance system according to the invention;
- Fig. 3a-e: schematic representations of frames of a video sequence;
- Fig. 4: a schematic representation of a further image;
- Fig. 5: a schematic representation of an embodiment of a method according to the invention; and
- Fig. 6: a schematic representation of a system architecture for realizing an embodiment of a method according to the invention.

In the figures, identical as well as functionally identical elements are provided with the same reference characters.

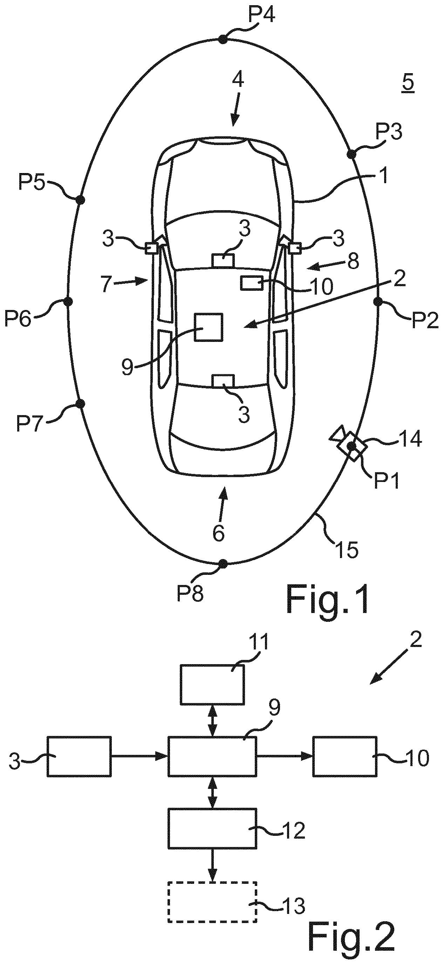

Fig. 1 shows a motor vehicle 1, which is formed as a passenger car in the present case. The motor vehicle 1 includes a driver assistance system 2, which can assist a driver of the motor vehicle 1 in driving the motor vehicle 1. The driver assistance system 2 has at least one vehicle-side camera 3, which is adapted to capture image data from an environmental region 5 of the motor vehicle 1. In the present case, the driver assistance system 2 has four vehicle-side cameras 3, by which a surround view camera system is formed. Therein, the driver assistance system 2 includes a first camera 3, which is attached to a front area 4 of the motor vehicle 1 and serves for monitoring the environmental region 5 in front of the motor vehicle 1, a second camera 3, which is attached to a rear area 6 of the motor vehicle 1 and serves for monitoring the environmental region 5 behind the motor vehicle 1, a third camera 3, which is attached to a left side 7 of the motor vehicle 1 and is formed to monitor the environmental region 5 to the left besides the motor vehicle 1, and a fourth camera 3, which is attached to a right side 8 of the motor vehicle 1 and serves for monitoring the environmental region 5 to the right besides the motor vehicle 1. The cameras 3 attached to the sides 7, 8 can for example be attached to wing mirrors of the motor vehicle 1 or to the motor vehicle 1 instead of wing mirrors. The cameras 3 can for example have fish-eye lenses, by which a capturing range of the respective camera 3 is increased.

The driver assistance system 2, which is additionally schematically illustrated in Fig. 2, can additionally have an evaluation device 9, which is for example formed as a video processor. The video processor 9 serves for processing the image data captured by the cameras 3 and generating images, which can be displayed on a vehicle-side display device 10 in the form of a video sequence. In addition, the driver assistance system 2 can have a vehicle-side storage device 11 as well as a communication interface 12. The driver assistance system 2 can communicate with a device 13 external to vehicle, for example another vehicle or an Internet-based database, via the communication interface 12.

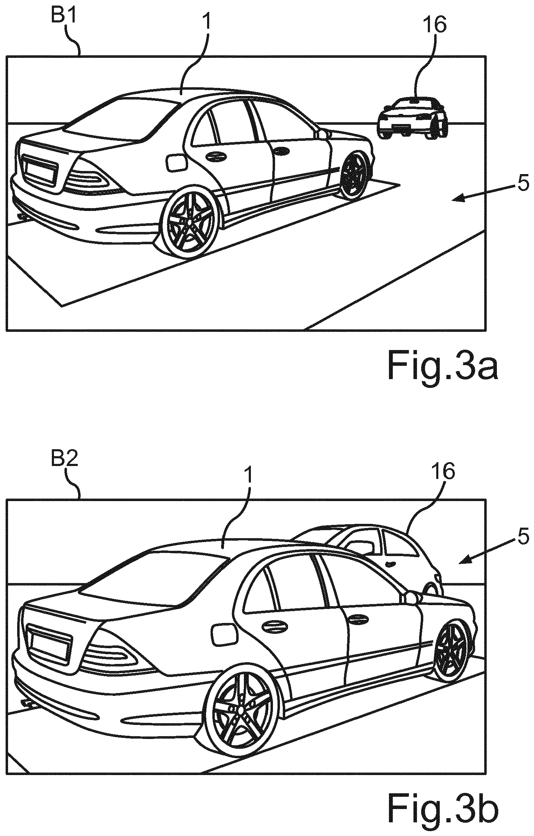

Now, in order to assist the driver of the motor vehicle 1 in driving the motor vehicle 1, the video sequence is displayed on the vehicle-side display device 10 in the form of consecutively displayed images B1, B2, B3, B4, B5 (see Fig. 3a to Fig. 3e). Therein, the environmental region 5 is displayed in the images B1 to B5 in particular from a third person perspective. This means that the environmental region 5 as well as the motor vehicle 1 are displayed from the view of an external observer. Thereto, a pose P1, P2, P3, P4, P5, P6, P7, P8 of a virtual camera 14 is determined. Here, the poses P1 to P8 of the virtual camera 14 are on an elliptic trajectory 15 extending around the motor vehicle 1, as shown in Fig. 1. The individual poses P1 to P8 can for example be selected by the driver of the motor vehicle 1 by means of an input device.

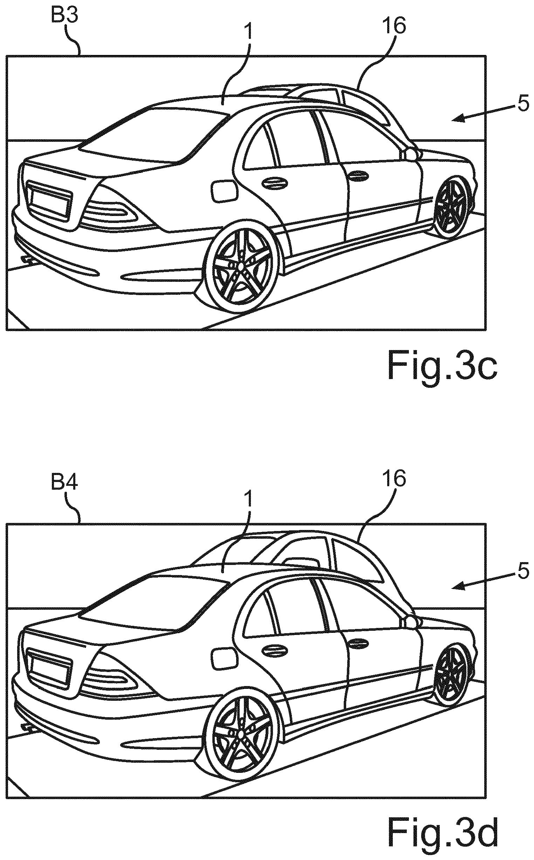

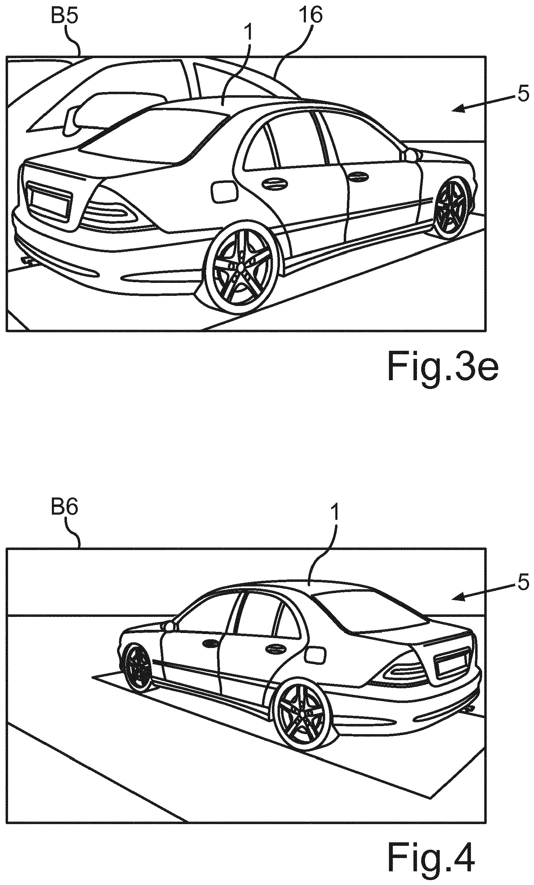

Therein, the image data of the cameras 3 is processed by the video processor 9 such that the image B1 to B5 results from a perspective, which corresponds to a camera perspective of the virtual camera 14 in the selected pose P1 to P8, for example the first pose P1. Fig. 3a to 3e show the video frames or images B1 to B5 generated consecutively in time. Therein, the environmental region 5 of the motor vehicle 1 is shown based on a first image B1 in Fig. 3a, wherein another vehicle 16 is additionally located in the image B1. The other vehicle 16 approaches the motor vehicle 1 from the front and has a first distance to the motor vehicle 1. In Fig. 3b, a second image B2 generated after the first image B1 in time is shown. The vehicle 16 has moved towards the motor vehicle 1 and has a second distance to the motor vehicle 1 less compared to the first distance. In Fig. 3c, a third image B3 generated after the second image B2 in time is shown. The motor vehicle 16 has moved further towards the motor vehicle 1 and has a third distance to the motor vehicle 1 less compared to the second distance. In Fig. 3d, a fourth image B4 generated after the third image B3 in time is shown, on which the vehicle 16 has approached the motor vehicle 1 to the point that it has a fourth distance less compared to the third distance and thereby the size ratios between the motor vehicle 1 and the other vehicle 16 are unrealistically represented in generating the fourth image B4. In the fifth image B5 generated after the fourth image B4 in time according to Fig. 3e too, in which the other vehicle 16 has a fifth distance to the motor vehicle 1 less compared to the fourth distance, this disproportional size variation of the other vehicle 16 is shown. Here, the unrealistically represented size ratios for example arise in that the vehicle 16 passes by close to the side 7 of the motor vehicle 1 and thereby the lateral camera 3 and a scale erratically changes.

In addition, in Fig. 4, a further image B6 of the motor vehicle 1 and of the environmental region 5 is shown, which has been generated from the image data as an image B6 captured by the virtual camera 14 in the pose P7. Here, the camera perspective of the virtual camera 14 corresponds to a viewing direction from the left behind the motor vehicle 1 to the motor vehicle 1. Here, it is shown that the other vehicle 16 is not visible in the image B6 displayed on the display device 10 since the other vehicle 16 is outside of a virtual capturing range of the virtual camera 14. In order to prevent this as well as the incorrect scaling of the vehicle 16 shown in Fig. 3d and Fig. 3e, a three-dimensional model M of the vehicle 16 is represented in the image B4, B5, B6 presented on the display device 10 instead of the vehicle 16. For example, the model M is inserted if the distance of the other vehicle 16 falls below a predetermined threshold value and/or the other vehicle 16 is outside of the virtual capturing range of the virtual camera 14.

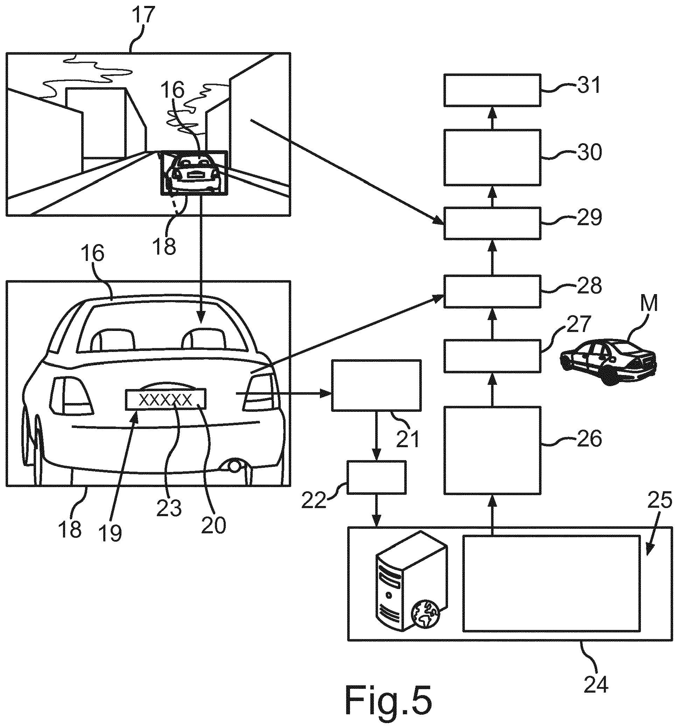

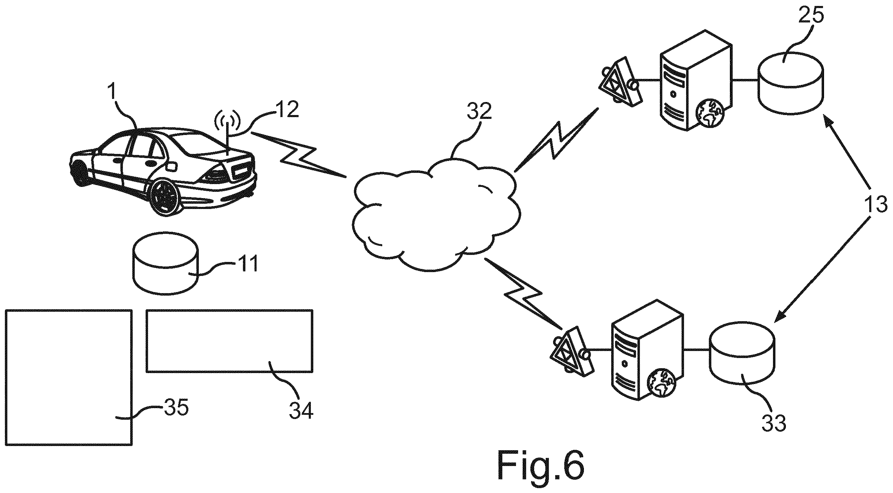

For determining the model M, a method can be performed, an embodiment of which is exemplarily shown in Fig. 5. Therein, the method can be used for a plurality of other vehicles 16 in the environmental region 5 of the motor vehicle 1. In Fig. 6, a system architecture for realizing the method is shown. Thereto, the other vehicle 16 is for example identified in the image data 17 of the camera 3 disposed on the front side. In Fig. 5, the image section 18 with the other vehicle 16 is additionally illustrated in enlarged manner. In addition, a characteristic feature 35 of the other vehicle 16 is captured based on the image data 17, based on which the model M is then determined. The characteristic feature 35 can for example be a brand, a type, a color, a year of manufacture, an engine type etc. of the other vehicle 16. Therein, for determining the characteristic feature 35, an object 19 at the other vehicle 16 can be captured. The object 19 is configured as an official license plate 20 in the present case. The official license plate 20 is recognized in the image data 17 in a method step 21, for example by means of object recognition. In a further method step 22, a registration indicator 23 is recognized. The registration indicator 23, which can for example include an array of letters and numbers, can be recognized in the image data 17 by means of text recognition in simple and fast manner. In a further method step 24, here, a device 13 external to vehicle, such as a database 25 external to vehicle, is searched for the feature 35 of the other vehicle 16 associated with the registration indicator 23. Here, the database 25 external to vehicle is an Internet-based database. The driver assistance system 2 for example has access to the Internet 32 via the communication interface 12 and can therefore access to the device 13 external to vehicle.

In addition, in a method step 26, an entry of the database 25 is identified, in which the feature 35 of the vehicle 16 corresponding to the license plate 20 is recorded. The entry of the database 25 can for example be downloaded and stored in the vehicle-side storage device 11. Based on this entry, a 3D model M is determined in a method step 27, which describes and represents the other vehicle 16. The model M can for example be recorded in the form of a reference model in a further database 33 external to vehicle and/or the storage device 11 internal to vehicle, which can also have a database 34.

In a method step 28, a color of the vehicle 16 recorded in the database 25 can then be compared to the actual color of the vehicle 16, which can be determined based on the image data 17. This serves for examining if the model M actually corresponds to the vehicle 16 and correctly represents it. In addition, environmental conditions, for example lighting conditions, are determined based on the image data 17. During rendering of the model M, these lighting conditions, for example lighting conditions at day or night times, a casting of shadow or street lighting, can be taken into account in a method step 29. In a method step 30, the official license plate 20 can additionally be inserted into the model M such that a realistic model M of the other vehicle 16 can be inserted into the image B4, B5, B6 in step 31.

Alternatively or additionally to searching a database for the at least one feature 35, the motor vehicle 1 can also communicate with the other vehicle 16 via the communication interface 12, in particular via Car2Car communication, such that the other vehicle 16 can directly transmit the characteristic features 35, for example the color, the brand etc. to the motor vehicle 1.

## Claims

1. Method for assisting a driver of a motor vehicle (1) in driving the motor vehicle (1), wherein based on image data (17) captured from an environmental region (5) of the motor vehicle (1) by at least one vehicle-side camera (3), at least one image (B1, B2, B3, B4, B5, B6) of the environmental region (5) is created for displaying on a vehicle-side display device (10),
whereby another vehicle (16) in the environmental region (5) is identified based on the image data (17) and the other vehicle (16) is replaced with a model (M) of a vehicle in the at least one image (B1, B2, B3, B4, B5, B6) of the environmental region (5) **characterized in that** least one characteristic feature (35), consisting of a brand and/or a type and/or a color, of the other vehicle (16) is determined and a model (M) representing the at least one characteristic feature (35) is determined.

2. Method according to claim 1,
**characterized in that**
a third person perspective is created based on the image data (17), from which the environmental region (5) with the motor vehicle (1) is represented in the at least one image (B1, B2, B3, B4, B5, B6) by determining a pose (P1, P2, P3, P4, P5, P6, P7, P8) of a virtual camera (14) in the environmental region (5) and determining the at least one image (B1, B2, B3, B4, B5, B6) from the view of the virtual camera (14).

3. Method according to claim 2,
**characterized in that**
the model (M) of the other vehicle (16) is inserted into the at least one image (B1, B2, B3, B4, B5, B6) if the other vehicle (16) is outside of a virtual capturing range of the virtual camera (14) because of the determined pose (P1, P2, P3, P4, P5, P6, P7, P8) of the virtual camera (14) and/or if the other vehicle (16) is outside of a capturing range of the at least one vehicle-side camera (3) at least in certain areas because of the determined pose (P1, P2, P3, P4, P5, P6, P7, P8) of the virtual camera (14).

4. Method according to any one of the preceding claims,
**characterized in that**
a distance of the other vehicle (16) to the motor vehicle (1) is determined and the other vehicle (16) is replaced with the model (M) in the at least one image (B1, B2, B3, B4, B5, B6) of the environmental region (5) as soon as the distance of the other vehicle (16) to the motor vehicle (1) falls below a predetermined threshold value.

5. Method according to any one of the preceding claims,
**characterized in that**
respective reference models are associated with predetermined reference features and one of the reference models is selected as the model (M) based on the determined characteristic feature (35) and inserted into the at least one image (B1, B2, B3, B4, B5, B6).

6. Method according to any one of the preceding claims
**characterized in that**
a predetermined object (19) at the other vehicle (16) describing the at least one characteristic feature (35) is captured by object recognition in the image data (17) and the at least one characteristic feature (35) is determined based on the object (19).

7. Method according to claim 6,
**characterized in that**
an official license plate (20) with a registration designation (23) of the other vehicle (16) is captured as the object (19) and the at least one characteristic feature (35) of the other vehicle (16) is determined based on the registration designation (23).

8. Method according to claim 6 or 7,
**characterized in that**
the at least one characteristic feature (35) is determined by searching a database (25, 34) internal to vehicle and/or external to vehicle, in which the captured object (19) is recorded with the at least one associated characteristic feature (35).

9. Method according to any one of claims 6 to 8,
**characterized in that**
the object (19) of the other vehicle (16) is inserted into the image (B1, B2, B3, B4, B5, B6) and is depicted together with the model (M) describing the other vehicle (16).

10. Method according to any one of claims 4 to 9,
**characterized in that**
the at least one characteristic feature (35) is wirelessly communicated from the other vehicle to a vehicle-side communication device (12).

11. Method according to any one of the preceding claims,
**characterized in that**
an orientation of the other vehicle (16) with respect to the motor vehicle (1) is captured and an orientation of the model (M) in the at least one image (B1, B2, B3, B4, B5, B6) is determined depending on the orientation of the other vehicle (16) and/or that at least one environmental condition, in particular lighting conditions, is captured and the model (M) is adapted to the at least one environmental condition.

12. Method according to any one of the preceding claims,
**characterized in that**
the other vehicle (16) is additionally captured by a sensor device different from the at least one camera (3).

13. Driver assistance system (2) for assisting a driver of a motor vehicle (1) in driving the motor vehicle (1), comprising at least one camera (3) for capturing image data (17) from an environmental region (5) of the motor vehicle (1), an evaluation device (9) for creating at least one image (B1, B2, B3, B4, B5, B6) of the environmental region (5) and including a display device (10) for displaying the at least one image (B1, B2, B3, B4, B5, B6),
**characterized in that**
the evaluation device (9) is adapted to identify another vehicle (16) in the environmental region (5) based on the image data (17) and to replace the other vehicle (16) with a model (M) of a vehicle in the at least one image (B1, B2, B3, B4, B5, B6) of the environmental region (5) while at least one characteristic feature (35), consisting of a brand and/or a type and/or a color, of the other vehicle (16) is determined and a model (M) representing the at least one characteristic feature (35) is determined.

14. Motor vehicle (1) with a driver assistance system (2) according to claim 13.

## Patentansprüche

1. Verfahren zum Unterstützen eines Fahrers eines Kraftfahrzeugs (1) beim Fahren des Kraftfahrzeugs (1), wobei aufgrund von Bilddaten (17), die von einem Umgebungsbereich (5) des Kraftfahrzeugs (1) durch mindestens eine fahrzeugseitige Kamera (3) erfasst werden, mindestens ein Bild (B1, B2, B3, B4, B5, B6) des Umgebungsbereichs (5) zum Anzeigen auf einer fahrzeugseitigen Anzeigevorrichtung (10) erzeugt wird, wobei aufgrund der Bilddaten (17) ein anderes Fahrzeug (16) in dem Umgebungsbereich (5) identifiziert wird, und wobei das andere Fahrzeug (16) durch ein Modell (M) eines Fahrzeugs in dem mindestens einen Bild (B1, B2, B3, B4, B5, B6) des Umgebungsbereichs (5) ersetzt wird,
**dadurch gekennzeichnet, dass** mindestens ein charakteristisches Merkmal (35) ermittelt wird, das aus einer Marke und/oder einem Typ und/oder einer Farbe des anderen Fahrzeugs (16) besteht, und ein Modell (M) ermittelt wird, welches das mindestens eine charakteristische Merkmal (35) darstellt.

2. Verfahren nach Anspruch 1,
**dadurch gekennzeichnet, dass**
aufgrund der Bilddaten (17) eine Drittpersonenperspektive erzeugt wird, aus welcher der Umgebungsbereich (5) mit dem Kraftfahrzeug (1) in dem mindestens einen Bild (B1, B2, B3, B4, B5, B6) dargestellt wird, indem eine Stellung (P1, P2, P3, P4, P5, P6, P7, P8) einer virtuellen Kamera (14) in dem Umgebungsbereich (5) ermittelt wird, und indem das mindestens eine Bild (B1, B2, B3, B4, B5, B6) aus der Sicht der virtuellen Kamera (14) ermittelt wird.

3. Verfahren nach Anspruch 2,
**dadurch gekennzeichnet, dass**
das Modell (M) des anderen Fahrzeugs (16) in das mindestens eine Bild (B1, B2, B3, B4, B5, B6) eingefügt wird, wenn sich das andere Fahrzeug (16) aufgrund der ermittelten Stellung (P1, P2, P3, P4, P5, P6, P7, P8) der virtuellen Kamera (14) außerhalb eines virtuellen Erfassungsbereichs der virtuellen Kamera (14) befindet, und/oder wenn sich das andere Fahrzeug (16) aufgrund der ermittelten Stellung (P1, P2, P3, P4, P5, P6, P7, P8) der virtuellen Kamera (14) mindestens in bestimmten Bereichen außerhalb eines Erfassungsbereichs der mindestens einen fahrzeugseitigen Kamera (3) befindet.

4. Verfahren nach einem der vorhergehenden Ansprüche,
**dadurch gekennzeichnet, dass**
ein Abstand des anderen Fahrzeugs (16) zu dem Kraftfahrzeug (1) ermittelt wird, und das andere Fahrzeug (16) durch das Modell (M) in dem mindestens einen Bild (B1, B2, B3, B4, B5, B6) des Umgebungsbereichs (5) ersetzt wird, sobald der Abstand des anderen Fahrzeugs (16) zu dem Kraftfahrzeug (1) unter einen vorbestimmten Schwellenwert fällt.

5. Verfahren nach einem der vorhergehenden Ansprüche,
**dadurch gekennzeichnet, dass**
entsprechende Referenzmodelle jeweiligen vorbestimmten Referenzmerkmalen zugeordnet werden und eines der Referenzmodelle aufgrund des ermittelten charakteristischen Merkmals (35) als das Modell (M) ausgewählt wird und in das mindestens eine Bild (B1, B2, B3, B4, B5, B6) eingefügt wird.

6. Verfahren nach einem der vorhergehenden Ansprüche,
**dadurch gekennzeichnet, dass**
ein vorbestimmtes Objekt (19) des anderen Fahrzeugs (16), welches das mindestens eine charakteristische Merkmal (35) beschreibt, durch eine Objekterkennung in den Bilddaten (17) erfasst wird, und das mindestens eine charakteristische Merkmal (35) aufgrund des Objekts (19) ermittelt wird.

7. Verfahren nach Anspruch 6,
**dadurch gekennzeichnet, dass**
ein offizielles Nummernschild (20) mit einer Registrierungsbezeichnung (23) des anderen Fahrzeugs (16) als das Objekt (19) erfasst wird, und das mindestens eine charakteristische Merkmal (35) des anderen Fahrzeugs (16) aufgrund der Registrierungsbezeichnung (23) ermittelt wird.

8. Verfahren nach Anspruch 6 oder 7,
**dadurch gekennzeichnet, dass**
das mindestens eine charakteristische Merkmal (35) ermittelt wird, indem eine fahrzeugeigene und/oder eine fahrzeugfremde Datenbank (25, 34) durchsucht wird, in der das erfasste Objekt (19) mit dem mindestens einen zugeordneten charakteristischen Merkmal (35) aufgezeichnet ist.

9. Verfahren nach einem der Ansprüche 6 bis 8,
**dadurch gekennzeichnet, dass**
das Objekt (19) des anderen Fahrzeugs (16) in das Bild (B1, B2, B3, B4, B5, B6) eingefügt wird und zusammen mit dem Modell (M) dargestellt wird, welches das andere Fahrzeug (16) beschreibt.

10. Verfahren nach einem der Ansprüche 4 bis 9,
**dadurch gekennzeichnet, dass**
das mindestens eine charakteristische Merkmal (35) drahtlos von dem anderen Fahrzeug an eine fahrzeugseitige Kommunikationsvorrichtung (12) kommuniziert wird.

11. Verfahren nach einem der vorhergehenden Ansprüche,
**dadurch gekennzeichnet, dass**
eine Orientierung des anderen Fahrzeugs (16) in Bezug zu dem Kraftfahrzeug (1) erfasst wird, und eine Orientierung des Modells (M) in dem mindestens einen Bild (B1, B2, B3, B4, B5, B6) in Abhängigkeit von der Orientierung des anderen Fahrzeugs (16) ermittelt wird, und/oder dass mindestens eine Umgebungsbedingung, insbesondere die Lichtbedingungen erfasst werden, und das Modell (M) auf mindestens eine Umgebungsbedingung angepasst wird.

12. Verfahren nach einem der vorhergehenden Ansprüche,
**dadurch gekennzeichnet, dass**
das andere Fahrzeug (16) außerdem durch eine Sensorvorrichtung erfasst wird, die verschieden von der mindestens einen Kamera (3) ist.

13. Fahrerassistenzsystem (2) zum Unterstützen eines Fahrers eines Kraftfahrzeugs (1) beim Fahren des Kraftfahrzeugs (1), das umfasst: mindestens eine Kamera (3) zum Erfassen von Bilddaten (17) von einem Umgebungsbereich (5) des Kraftfahrzeugs (1); eine Beurteilungsvorrichtung (9) zum Erzeugen mindestens eines Bildes (B1, B2, B3, B4, B5, B6) des Umgebungsbereichs (5); und mindestens eine Anzeigevorrichtung (10) zum Anzeigen des mindestens einen Bildes (B1, B2, B3, B4, B5, B6),
**dadurch gekennzeichnet, dass**
die Beurteilungsvorrichtung (9) geeignet ist zum Identifizieren aufgrund der Bilddaten (17) eines anderen Fahrzeugs (16) in dem Umgebungsbereich (5) und zum Ersetzen des anderen Fahrzeugs (16) durch ein Modell (M) eines Fahrzeugs in dem mindestens einen Bild (B1, B2, B3, B4, B5, B6) des Umgebungsbereichs (5), wobei mindestens ein charakteristisches Merkmal (35) ermittelt wird, das aus einer Marke und/oder einem Typ und/oder einer Farbe des anderen Fahrzeugs (16) besteht, und wobei ein Modell (M) ermittelt wird, welches das mindestens eine charakteristische Merkmal (35) darstellt.

14. Kraftfahrzeug (1) mit einem Fahrerassistenzsystem (2) nach Anspruch 13.

## Revendications

1. Procédé pour aider le conducteur d'un véhicule automobile (1) à conduire le véhicule automobile (1), dans lequel, sur la base de données d'image (17) capturées à partir d'une région d'environnement (5) du véhicule automobile (1) par au moins une caméra côté véhicule (3), au moins une image (B1, B2, B3, B4, B5, B6) de la région d'environnement (5) est créée pour être affichée sur un dispositif d'affichage côté véhicule (10), un autre véhicule (16) se trouvant dans la région d'environnement (5) étant identifié sur la base des données d'image (17) et l'autre véhicule (16) étant remplacé par un modèle (M) d'un véhicule dans ladite au moins une image (B1, B2, B3, B4, B5, B6) de la région d'environnement (5),
**caractérisé en ce qu'**au moins un élément caractéristique (35), constitué d'une marque et/ou d'un type et/ou d'une couleur, de l'autre véhicule (16) est déterminé et **en ce qu'**un modèle (M) représentant ledit au moins un élément caractéristique (35) est déterminé.

2. Procédé selon la revendication 1,
**caractérisé en ce que**, sur la base des données d'image (17), il est créé une perspective de tierce personne à partir de laquelle la région d'environnement (5) comportant le véhicule automobile (1) est représentée dans ladite au moins une image (B1, B2, B3, B4, B5, B6) en déterminant une attitude (P1, P2, P3, P4, P5, P6, P7, P8) d'une caméra virtuelle (14) dans la région d'environnement (5) et en déterminant au moins une image (B1, B2, B3, B4, B5, B6) depuis le point de vue de la caméra virtuelle (14).

3. Procédé selon la revendication 2,
**caractérisé en ce que** le modèle (M) de l'autre véhicule (16) est inséré dans ladite au moins une image (B1, B2, B3, B4, B5, B6) si l'autre véhicule (16) se trouve en dehors d'une portée de capture virtuelle de la caméra virtuelle (14) en raison de l'attitude déterminée (P1, P2, P3, P4, P5, P6, P7, P8) de la caméra virtuelle (14) et/ou si l'autre véhicule (16) se trouve en dehors d'une portée de capture de ladite au moins une caméra côté véhicule (3) au moins dans certaines zones en raison de l'attitude déterminée (P1, P2, P3, P4, P5, P6, P7, P8) de la caméra virtuelle (14).

4. Procédé selon l'une quelconque des revendications précédentes,
**caractérisé en ce qu'**une distance de l'autre véhicule (16) par rapport au véhicule automobile (1) est déterminée et **en ce que** l'autre véhicule (16) est remplacé par le modèle (M) dans ladite au moins une image (B1, B2, B3, B4, B5, B6) de la région d'environnement (5) dès que la distance de l'autre véhicule (16) par rapport au véhicule automobile (1) devient inférieure à une valeur de seuil prédéterminée.

5. Procédé selon l'une quelconque des revendications précédentes,
**caractérisé en ce que** des modèles de référence respectifs sont associés à des éléments caractéristiques de référence prédéterminés et **en ce que** l'un des modèles de référence est sélectionné en tant que modèle (M) sur la base de la caractéristique déterminée (35) et est inséré dans ladite au moins une image (B1, B2, B3, B4, B5, B6).

6. Procédé selon l'une des revendications précédentes, **caractérisé en ce qu'**un objet (19) prédéterminé au niveau de l'autre véhicule (16), décrivant ledit au moins un élément caractéristique (35), est capturé par reconnaissance d'objet dans les données d'image (17) et **en ce que** ledit au moins un élément caractéristique (35) est déterminé sur la base de l'objet (19).

7. Procédé selon la revendication 6,
**caractérisé en ce qu'**une plaque d'immatriculation officielle (20) portant une désignation d'immatriculation (23) de l'autre véhicule (16) est capturée en tant qu'objet (19) et **en ce que** ledit au moins un élément caractéristique (35) de l'autre véhicule (16) est déterminé sur la base de la désignation d'immatriculation (23).

8. Procédé selon la revendication 6 ou 7,
**caractérisé en ce que** ledit au moins un élément caractéristique (35) est déterminé par une recherche dans une base de données (25, 34) interne au véhicule et/ou externe au véhicule, dans laquelle l'objet capturé (19) est enregistré avec ledit au moins un élément caractéristique (35) associé.

9. Procédé selon l'une quelconque des revendications 6 à 8,
**caractérisé en ce que** l'objet (19) de l'autre véhicule (16) est inséré dans l'image (B1, B2, B3, B4, B5, B6) et est représenté avec le modèle (M) décrivant l'autre véhicule (16).

10. Procédé selon l'une quelconque des revendications 4 à 9,
**caractérisé en ce que** ledit au moins un élément caractéristique (35) est communiqué sans fil depuis l'autre véhicule à un dispositif de communication côté véhicule (12).

11. Procédé selon l'une quelconque des revendications précédentes,
**caractérisé en ce qu'**une orientation de l'autre véhicule (16) par rapport au véhicule automobile (1) est capturée et **en ce qu'**une orientation du modèle (M) dans ladite au moins une image (B1, B2, B3, B4, B5, B6) est déterminée en fonction de l'orientation de l'autre véhicule (16) et/ou **en ce qu'**au moins une condition d'environnement, en particulier des conditions d'éclairage, est capturée et **en ce que** le modèle (M) est adapté à ladite au moins une condition d'environnement.

12. Procédé selon l'une quelconque des revendications précédentes,
**caractérisé en ce que** l'autre véhicule (16) est en outre capturé par un dispositif capteur différent de ladite au moins une caméra (3).

13. Système d'aide à la conduite (2) pour aider le conducteur d'un véhicule automobile (1) à conduire le véhicule automobile (1), comprenant au moins une caméra (3) destinée à capturer des données d'image (17) depuis une région d'environnement (5) du véhicule automobile (1), un dispositif d'évaluation (9) destiné à créer au moins une image (B1, B2, B3, B4, B5, B6) de la région d'environnement (5) et comportant un dispositif d'affichage (10) destiné à afficher ladite au moins une image (B1, B2, B3, B4, B5, B6),
**caractérisé en ce que**
le dispositif d'évaluation (9) est conçu pour identifier un autre véhicule (16) dans la région d'environnement (5) sur la base des données d'image (17) et pour remplacer l'autre véhicule (16) par un modèle (M) d'un véhicule dans ladite au moins une image (B1, B2, B3, B4, B5, B6) de la région d'environnement (5), tandis qu'au moins un élément caractéristique (35), constitué d'une marque et/ou d'un type et/ou d'une couleur, de l'autre véhicule (16) est déterminé et **en ce qu'**un modèle (M) représentant ledit au moins un élément caractéristique (35) est déterminé.

14. Véhicule automobile (1) équipé d'un système d'aide à la conduite (2) selon la revendication 13.
